# Europäisches Patentamt

# European Patent Office

# Office européen des brevets

(11) Numéro de publication: **0 136 200**
**B1**

(12) **FASCICULE DE BREVET EUROPEEN**

(19)

(12)

(45) Date de publication du fascicule du brevet:
**19.11.87**

(21) Numéro de dépôt: **84401557.8**

(22) Date de dépôt: **25.07.84**

(51) Int. Cl.⁴: **G 01 F 23/26**

(54) Sonde de mesure de niveau de liquide dans un réservoir ou une conduite.

(30) Priorité: **03.08.83 FR 8312775**

(43) Date de publication de la demande:
**03.04.85 Bulletin 85/14**

(45) Mention de la délivrance du brevet:
**19.11.87 Bulletin 87/47**

(84) Etats contractants désignés:
**DE FR GB IT NL SE**

(56) Documents cités:
**FR - A - 2 451 024**
**US - A - 2 700 901**
**US - A - 2 760 372**
**US - A - 3 120 124**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Lombard, Claude, 60, rue Corneille,**
**F-78150 Le Chesnay (FR)**
Inventeur: **Warenghem, Michel, 8, avenue de**
**L'Abé-Saint-Pierre, F-92150 Suresnes (FR)**

ACTORUM AG

## Description

La présente invention a pour objet un dispositif de mesure de niveau de liquide, notamment de carburant dans les réservoirs de véhicules automobiles ou engins.

On connait de nombreuses sondes de ce genre basées sur des principes physiques très divers. La plus répandue utilise le déplacement d'un flotteur à la surface du liquide pour mouvoir le curseur d'un potentiomètre, la valeur de la tension recueillie étant représentative du niveau.

Un certain nombre de réalisations ont été basés sur la différence de constante diélectrique entre l'air et le liquide à mesurer. A cet effet, la sonde de mesure prend la forme d'un condensateur à armatures planes ou concentriques entre lesquelles il y a de l'air quand le réservoir est vide ou du liquide quand le réservoir est plein.

Dans le cas de liquides isolants, le fonctionnement est satisfaisant. Il n'en est pas de même quand la nature du liquid varie, entraînant un changement de la constante diélectrique correspondante et, plus encore, quand le liquide est plus ou moins conducteur, la mesure étant alors faussée ou délicate. C'est notamment, le cas pour l'eau et les liquides hygrophiles tels que les alcools même mélangés aux hydrocarbures.

Il a été envisagé d'utiliser une électrode de référence pour éliminer les problèmes de variation de la constante diélectrique avec la température notamment en la plongeant dans un liquide de type hydrocarburé dans un réservoir séparé.

Le brevet FR-A-2451024 décrit une telle sonde capacitive de mesure de niveau de liquide dans une réservoir comprenant une partie haute servant à la mesure du niveau de liquide et une partie basse, toujours immergée dans le liquide à mesurer, servant de condensateur de référence, les deux parties communiquant librement avec le liquide à mesurer par des orifices prévus à cet effet.

Ce brevet apporte certaines solutions aux différents problèmes rencontrés et notamment au changement de nature du liquide, à ses variations de conductibilité, à ses variations de constante diélectrique avec la température, à la ligne de pente parfois tortueuse qui correspond aux moindres variations des indications du dispositif quand l'inclinaison du réservoir varie, sous l'effet de la pente de la route dans le cas d'un véhicule automobile ou encore si celui-ci a au moins une roue sur un trottoir.

Toutefois, dans la sonde conforme au brevet FR-A-2451024, le placement de l'électrode compensatrice dans le canal d'aspiration exige pratiquement une pompe électrique mise en route avant le démarrage du moteur pour que cette électrode soit baignée par le liquide dont le niveau est à mesurer. De plus, les électrodes en forme de peigne augmentent les risques de fuite électrique des condensateurs et n'assurent pas le blindage extérieur du dispositif de mesure indispensable pour résister aux perturbations extérieures et éviter de créer de telles perturbations.

L'invention vise à fournir une sonde capacitive de mesure de niveau qui permette d'éviter ces inconvénients, tout en étant d'une conception et en permettant un calcul des capacités plus simples que dans la solution de l'art antérieur précitée.

A cet effet, l'invention a pour objet une sonde capacitive de mesure de niveau de liquide dans un réservoir comme décrite dans la revendication 1.

Grâce à un tel agencement, la valeur du niveau de liquide sera donc connue par comparaison entre la valeur de la capacité de référence $C_1$ égale à la différence $(C_1 + C_2) - C_3$ et la valeur de la capacité $C_3$ de mesure de niveau.

La parfaite symétrie de tous les éléments constitutifs permet d'éliminer des problèmes de dilatation de la sonde et de variation des constantes diélectriques avec la température ambiante, notamment celle du liquide à mesurer.

L'invention sera maintenant décrite en se référant aux figures annexées, sans que celles-ci soient limitatives de la portée de l'invention:

La fig. 1 est une vue en coupe d'une sonde placée dans un réservoir de carburant;

la fig. 2 est une vue en coupe agrandie de ladite sonde;

la fig. 3 est une vue en perspective de la partie centrale de la sonde montrant la disposition des armatures centrales des condensateurs, après qu'ait été enlevé l'un des diélectriques minces auxiliaires qui isolent électriquement ces armatures du liquide à mesurer;

la fig. 4 est une vue en coupe selon la ligne AA de la fig. 2, montrant les deux condensateurs qui servent à mesurer le niveau;

la fig. 5 est une vue en coupe selon la ligne BB de la fig. 2, qui montre le condensateur de référence ainsi que la crépine d'aspiration du carburant;

la fig. 6 est une vue analogue à la fig. 2 d'une variante de réalisation dans laquelle l'alimentation en carburant se fait à travers le condensateur de référence qui est à cette fin percé de trous de passage de fluide;

les fig. 7 à 12 correspondent à un mode préférentiel de réalisation et, notamment;

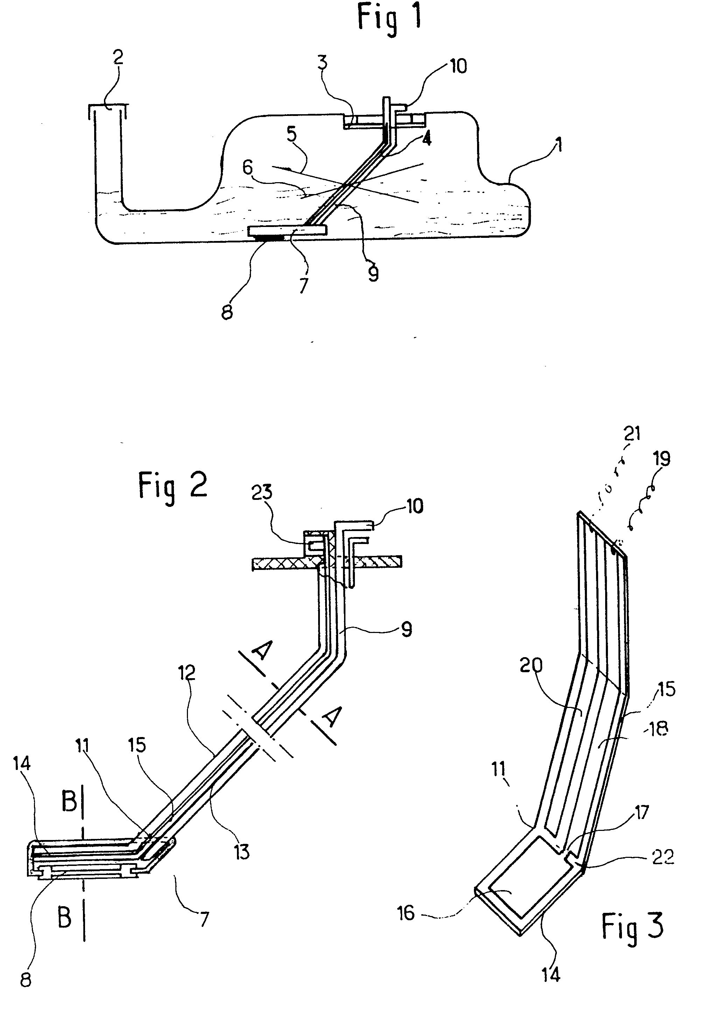

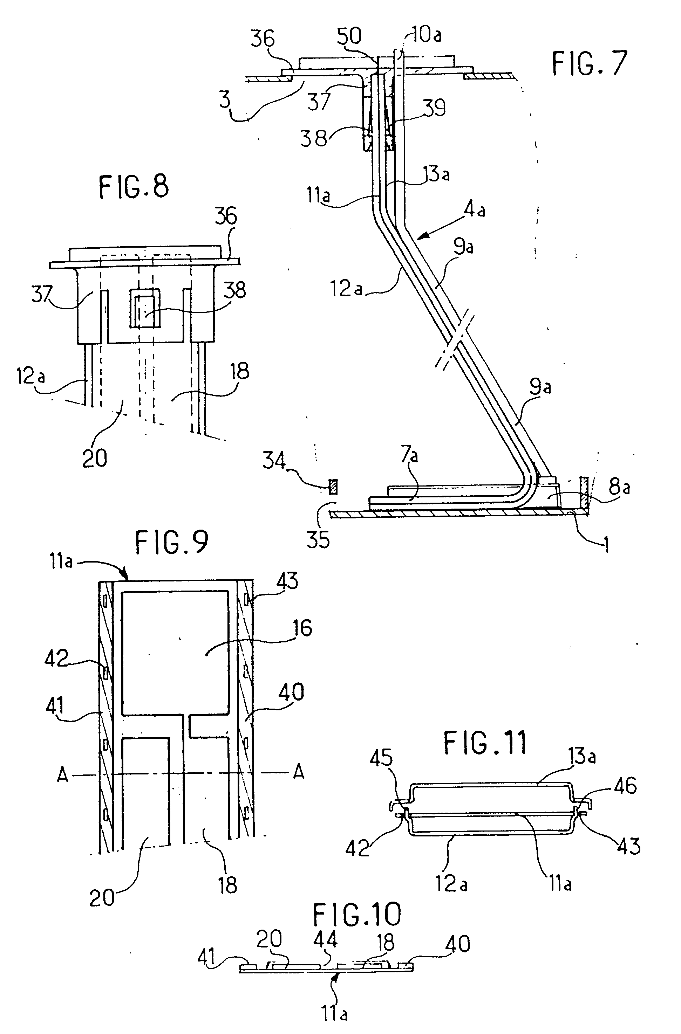

la fig. 7 est une vue en coupe d'une sonde de niveau analogue à celle de la fig. 2, le condensateur de référence étant plié à l'inverse pour occuper moins de place et l'armature externe étant clipsée dans une pièce en matière plastique jouant le rôle d'obturateur sur le trou d'accès au réservoir;

la fig. 8 est une vue de face du clipsage de l'armature sur la pièce en matière plastique;

la fig. 9 est une vue de face partielle des armatures centrales de la sonde montrant les métallisations auxiliaires de contact avec l'armature externe et les trous de fixation;

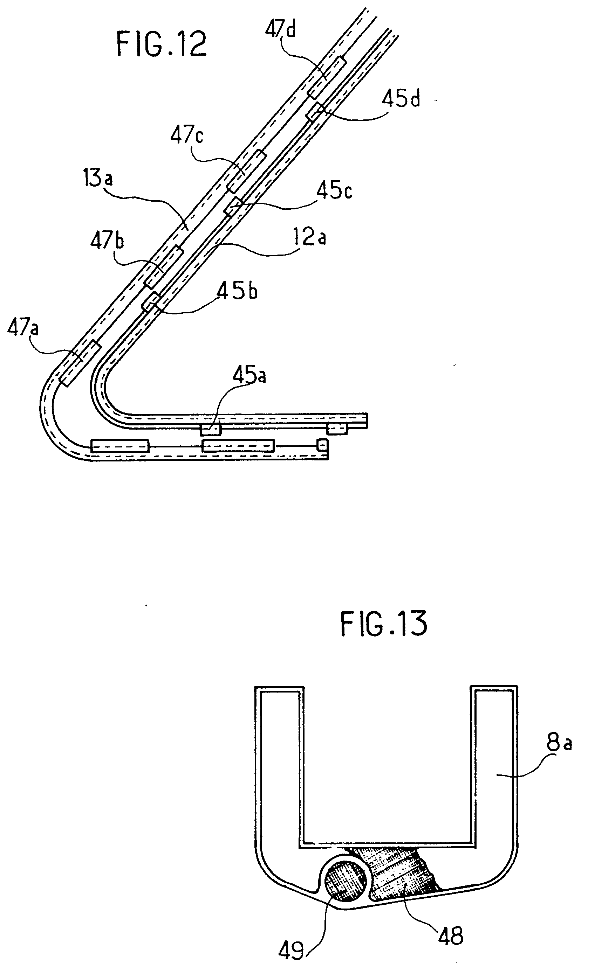

la fig. 10 est une vue de détail en coupe selon la ligne A–A de la fig. 9 montrant les armatures centrales de la fig. 9;

la fig. 11 est une vue en coupe transversale des armatures externes montrant les crochets de maintien des armatures centrales;

la fig. 12 est une vue en élévation latérale des armatures externes avant emboîtage; et

la fig. 13 est une vue des dessus partiellement crevée de la crépine d'aspiration représentée à la fig. 7.

Sur la fig. 1 apparaît un réservoir du carburant 1 possédant un orifice de remplissage 2 et un trou de sonde 3 recevant la sonde de niveau 4. La forme de cette sonde est choisie de façon à ce qu'elle passe par les points d'intersection des lignes telles que 5 et 6 correspondant au niveau de liquide pour deux inclinaisons contraires égales du réservoir.

La sonde possède également une partie basse 7 formant condensateur de référence et qui porte aussi la crépine d'aspiration 8 prolongée par un tuyau 9 débouchant en 10 à l'extérieur du réservoir.

Sur la fig. 2 plus détaillée, on distingue un long circuit électrique méplat 11 isolé électriquement à sa surface et parcourant toute la longueur de la sonde, enserré entre deux plaques métalliques 12 et 13 qui sont en contact galvanique avec le liquide à mesurer. Ces plaques 12 et 13 peuvent être électriquement isolées du liquide si nécessaire.

La partie basse 14 du circuit 11 constitue avec les plaques 12 et 13 le condensateur de référence, tandis que la partie haute 15 constitue les condensateurs de mesure de niveau.

L'aspiration du carburant à travers la crépine 8 ne passe pas à travers le condensateur de référence mais directement dans le tuyau 9. Le circuit 11 et les plaques 12 et 13 sont électriquement reliées à des circuits électroniques 23 assurant le calcul du niveau de remplissage.

Sur la fig. 3 on distingue sur la partie basse 14 une électrode métallique plate 16 reliée par un fin conducteur 17 à une bande métallique 18 sortant à l'extérieur de l'appareil en 19. Une bande métallique 20 de mêmes dimensions que la bande 18 sort en 21 de l'appareil.

Les bandes 18 et 20 sont séparées de la plaque métallique 16 par un petit intervalle 22.

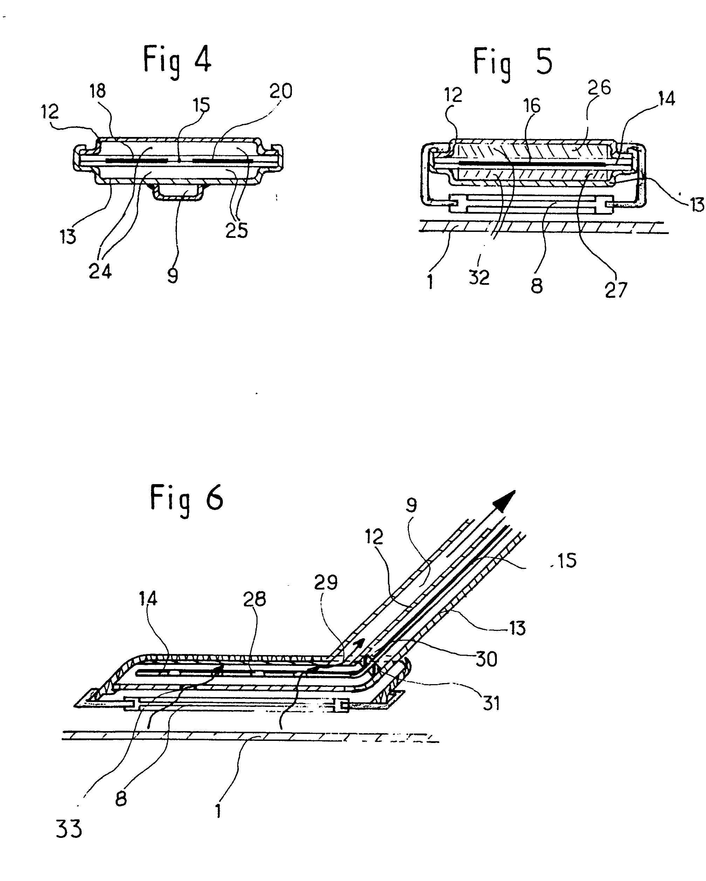

La coupe AA de la fig. 2 représentée fig. 4 montre le tuyau d'aspiration 9 et les plaques métalliques 12 et 13 agrafées et reliées électriquement entre elles. La partie 15 du circuit méplat 11 avec ses deux bandes métalliques 18 et 20 formant armatures internes constitue avec les plaques métalliques 12, 13 formant armatures externes des condensateurs double face 24 et 25 dont le diélectrique peut être soit de l'air, soit du liquide. Ces bandes métalliques 18 et 20 sont électriquement isolées du liquide par un diélectrique mince solide non mouillant tel qu'une résine fluorée ou un dérivé de polyéthylène, tandis que les plaques 12 et 35 peuvent ne pas l'être.

La coupe BB de la fig. 2 représentée fig. 5 montre la crépine d'aspiration 8 près du fond du réservoir 1. La partie 14 du circuit méplat 11 n'enferme qu'une seule armature isolée 16 formant armature interne et constituant avec les plaques 12 et 13 formant armatures externes un seul condenssateur double face 32. L'espace interarmature du condensateur 32 peut être rempli par un produit absorbant poreux 26, 27 jouant le rôle de réserve lorsque le réservoir 1 est presque vide, par exemple des fibres absorbantes.

La fig. 6 montre une variante de réalisation de la partie basse 7 de la sonde et dans laquelle le liquide du réservoir est aspiré à travers le condensateur de référence par des orifices 33, 28, 29 dans les plaques 13, 14, 12 jusqu'au tuyau 9.

Des obturateurs 30 et 31 empêchent l'aspiration de se faire entre les plaques 12 et 13 en cas de colmatage de la crépine, ce qui fausserait la mesure.

Le fonctionnement du dispositif est basé sur la différence de constante diélectrique entre le liquide à mesurer et l'air ambiant.

Le condensateur de référence 32 est toujours de liquide soit par capillarité dans le cas de la fig. 5, soit par aspiration du liquide, cas de la fig. 6. Sa valeur dépend de la nature du liquide, de l'écartement des armatures, de la température. Dans des conditions déterminées, elle a une certaine valeur $C_1$.

La capacité des condensateurs 24 et 25 dépend en outre du niveau du iquide dans la sonde 4. Dans des conditions déterminées, la valeur des capacités correspondantes est $C_2$ et $C_3$. La mesure de ces valeurs par un procédé non décrit est du domaine de l'homme de l'art et peut être assurée facilement par des équipements ou circuits intégrés électroniques disponibles dans le commerce.

On ne connaît pas directement la capacité $C_1$ puisque la sortie électrique 19 ne donne accès qu'à l'ensemble des conducteurs 16 et 18 soit la somme de $C_1$ et de $C_2$. Par contre, $C_3$ est accessible directement par la sortie 21.

La valeur $C_1$ est simplement la différence $(C_1 + C_2) - C_3$ puisque par construction $C_2$ et $C_3$ ont la même valeur.

La valeur du niveau de liquide résulte de la comparaison de la valeur de $C_3$, capacité du condensateur de mesure, et de la valeur de $C_1$, capacité du condensateur de référence. Si les capacités ne sont pas négligeables, il faut les déduire préalablement. $C_1$, $C_2$, $C_3$ variant dans les mêmes proportions avec la nature du liquide et la température, le dispositif est donc autocompensé.

La variante de réalisation qui consisterait à mettre un isolant solide ou gazeux très épais autour du conducteur 18, qui pourrait être filiforme pour réduire sa capacité par rapport aux plaques 12 et 13, se heurte à des difficultés pratiques et l'on perd l'avantage de la simplicité de réalisation.

La forme des différentes armatures peut être quelconque. Elle peut être notamment tubulaire par utilisation de circuit imprimé souple enroulé sans sortir du cadre de l'invention.

Le mode de réalisation décrit ci-dessus peut être amélioré pour faciliter la production en série, le montage et l'implantation sur véhicule. Il existe en effet un grand nombre de types de réservoirs de véhicule et il est intéressant de pouvoir partir d'éléments standards fabriqués en bandes à plier et à tronçonner au dernier moment avant la fabrication d'un modèle déterminé. Les fig. 7 à 12 correspondent à un tel mode de réalisation.

Reprenant dans le détail la vue en coupe de la sonde sur la fig. 7, le réservoir porte la même référence 1 avec son trou de sonde 3 que sur la fig. 2.

Les plaques métalliques 12a et 13a qui constituent l'armature extérieure des condensateurs $C_1$, $C_2$, $C_3$ sont repliées vers le bas à plus de 270° en formant un angle aigü pour réduire la place occupée par la sonde et permettre à la crépine d'aspiration 8a de prende place dans un bol 34 placé au fond du réservoir et muni de trous de communications 35.

Ce bol permet d'éviter le déjaugeage en virage; le tuyau d'aspiration 9a de la crépine 8a débouche à l'extérieur en 10a. Il traverse la plaque de fermeture en plastique 36 qui porte vers l'intérieur du réservoir 1 une protubérance 37 à l'intérieur de laquelle viennent se clipser, grâce à des languettes élastiques découpées 38 et 39, les armatures métalliques 12a et 13a; ces languettes viennent se placer dans des cavités correspondantes de la protubérance 37.

Le circuit méplat semi-couple 11a qui porte les armatures internes 16, 18, 20 est enserré entre les armatures externes 12a et 13a. Il sort à l'extérieur du réservoir en 50.

La fig. 8 est une vue de face du haut de la sonde de niveau, vue du côté opposé au tuyau d'aspiration 9a. Elle porte les mêmes références que la fig. 7.

La fig. 9 est une vue de face partielle du ruban méplat 11a qui porte les armatures intérieures 16, 18, 20 correspondant aux condensateurs $C_1$, $C_2$, $C_3$. Ces armatures sont isolées du liquide. Deux bandes métalliques 40 et 41 situées en bordure du ruban ne sont pas isolées d'un côté comme le montre la fig. 10, le produit isolant 44 ne couvrant que la partie centrale du circuit méplat 11a.

Ces bandes servent à assurer le contact entre l'extérieur du réservoir 1 en 50 et les armatures métalliques 12a et 13a qui sont enchâssées dans la protubérance en plastique 37 et qui, sans cette disposition, ne seraient pas accessibles de l'extérieur en 50.

Des perforations 42, 43 placées à intervalles réguliers en bordure du circuit méplat 11a servent à indexer en longueur et à tendre en largeur de circuit méplat.

Les machines à perforer les films de cinéma peuvent convenir pour cette application.

La fig. 11 est une vue en coupe de la sonde montrant le circuit méplat 11a tendu et indexé par des dents 45 et 46 de l'armature métallique 12a et pénétrant dans les trous 42 et 43 du circuit méplat 11a.

Les dents 45a à 45d représentées fig. 12 viennent s'intercaler lors de l'assemblage entre des dents plus larges 47a à 47d de l'armature métallique 13a qui sont ensuite serties par dessus l'armature 12a et le circuit méplat 11a.

Les dimensions respectives des dents 45 et 47 sont choisies de manière à permettre l'assemblage et le sertissage des dents 47 malgré la pliure des armatures.

La fig. 13 est une vue de dessus de la crépine d'aspiration 8a partiellement crevée sur le dessus pour faire apparaître le tamis d'aspiration 48 de la crépine qui occupe le dessous d'un U ayant une prise d'aspiration 49 dans laquelle pénètre le tuyau d'aspiration 9a.

La fonctionnement est tout à fait identique à celui des sondes décrites dans les figures précédentes.

Les armatures métalliques 12a et 13a peuvent être remplacées par des pièces en plastique métallisé par dépôt chimique ou électrolytique ou même plus simplement par peinture au pistolet d'un revêtement à base de poudre de nickel.

Le circuit 11a peut être prévu pour la plus grande longueur utilisée, les bandes métalliques 18 et 20 constituant les armatures internes étant coupées à la longueur utilisée.

Les armatures métalliques 12a et 13a ainsi que le circuit méplat 11a peuvent être produits sous forme d'un ruban continue sur machine à grande cadence, puis découpés à la longueur voulue et formés sur une machine simple pour un usage déterminé.

## Revendications

1. Sonde capacitive de mesure de niveau de liquide dans un réservoir (1) comprenant une partie haute (4) servant à la mesure du niveau de liquide et une partie basse (7), toujours immergée dans le liquide à mesurer, servant de condensateur de référence (32), les deux parties communiquant librement avec le liquide à mesurer par des orifices prévus à cet effet, caractérisée en ce qu'elle comporte un circuit électrique méplat (11) et deux plaques métalliques (12 et 13) parallèles au circuit (11), et en ce que la partie haute (4) de la sonde est constituée par deux condensateurs de mesure parallèles (24 et 25) identiques en longueur et de même capacité $C_2$, $C_3$ réalisés par deux bandes métalliques (18 et 20) du circuit (11) formant armatures internes et les plaques métalliques (12 et 13) formant armatures externes, et en ce que la partie basse (7) de la sonde est constituée par un condensateur de référence (32) de capacité $C_1$ réalisé par une partie métallique (14) du circuit (11) formant armature interne, connectée à une des armatures internes (18, 20) d'un des condensateurs de mesure (24, 25), et par les plaques métalliques (12 et 13) formant armatures externes, le condensateur de référence et le condensateur de mesure auquel il est connecté formant un ensemble de capacité $C_1 + C_2$.

2. Sonde de niveau selon la revendication 1, caractérisé en ce que d'une au moins des deux armatures du condensateur de mesure (24, 25) et du condensateur de référence (32) est isolée du liquide à mesurer par un diélectrique solide mince non mouillant plaqué sur lesdites armatures (16, 18, 20) et ménageant vis-à-vis des autres armatures (12, 13) un espace suffisant pour le passage de l'air ou du liquide.

3. Sonde de niveau selon la revendication 2, caractérisée en ce que l'espace interarmature des deux condensateurs de mesures (24, 25) est formé d'une part par le diélectrique mince solide et, d'autre part, par l'air ou le liquide à mesurer, l'un (24) des condensateurs de mesure et le condensateur de référence (32) étant connectés ensemble par leur armature isolée (18, 16).

4. Sonde de niveau selon l'une quelconque des revendications 2 et 3, caractérisé en ce que le diélectrique mince solide non mouillant est une résine fluorée ou un dérivé de polyéthylène.

5. Sonde de niveau selon l'une des revendications 1 à 4, caractérisé en ce que l'espace interarmatures du condensateur de référence (32) placé dans la partie basse (7) est rempli par des fibres absorbantes mouillées par le liquide.

6. Sonde de niveau selon l'une quelconque des revendications 1 à 5, caractérisée en ce qu'une crépine d'aspiration (8) du liquide est incluse dans la partie basse (7) de la sonde.

7. Sonde de niveau selon l'une quelconque des revendications 1 à 6, caractérisée en ce qu'il est prévu dans les différentes parties constitutives du condensateur de référence (32) des orifices (33, 28, 29) permettant le passage du liquide depuis la crépine (8) jusqu'à la conduite d'aspiration (9) et qu'il est prévu des moyens d'obturation (30, 31) évitant l'aspiration du liquide contenu dans la partie haute (4) de la sonde.

8. Sonde de niveau selon l'une quelconque des revendications 1 à 7, caractérisée en ce qu'il est prévu des circuits électroniques de traitement immédiatement au débouché (19, 21) de la sonde à l'extérieur du réservoir.

9. Sonde de niveau selon l'une quelconque des revendications 1 à 8, caractérisée en ce que les armatures (18, 20 et 16) qui constituent respectivement les armatures internes des condensateurs de mesure (24 et 25) et du condensateur de référence (32) sont constituées par un circuit méplat (11a) comportant, sur les bords, des trous (42 et 43) et en ce que les armatures métalliques (12a et 13a) servant d'armatures externes aux condensateurs sont dotées de dents (45 et 46) sur leurs bords, destinées à pénétrer dans les trous (42 et 43) pour positionner en longueur et tendre en largeur l'armature interne dans les armatures externes.

10. Sonde de niveau selon l'une quelconque des revendications 1 à 9, caractérisé en ce que les armatures métalliques (12a, 13a) sont clipsées à l'aide d'au moins une languette (38) à l'intérieur d'une protubérance (37) de la plaque de fermeture (36) du trou de sonde (3).

11. Sonde de niveau selon l'une quelconque des revendications 9 et 10, caractérisée en ce que le circuit méplat (11a) présente sur son bord des bandes métalliques (40, 41) venant en contact électrique avec les armatures métalliques (12a, 13a).

12. Sonde de niveau selon l'une quelconque des revendications 1 à 11, caractérisée en ce que la partie inférieure (7a) de la sonde (4a) est repliée sur le corps de sonde pour former avec celle-ci un angle aigü, ladite partie inférieure (7a) étant parallèle au fond du réservoir (1).

13. Sonde de niveau selon l'une quelconque des revendications 1 à 12, caractérisée en ce que la crépine d'aspiration (8a) du liquide est en forme de U entourant sur trois côtés la partie basse (7a) de la sonde et qu'il est prévu un tamis de filtrage à la partie inférieure de l'U.

14. Sonde de niveau selon l'une quelconque des revendications 1 à 13, caractérisée en ce que les armatures (12a, 13a) sont en matériau plastique métallisé en surface à l'aide d'une peinture contenant du métal pulvérulent.

**Patentansprüche**

1. Kapazitive Sonde zum Messen eines Flüssigkeits-Niveaus in einem Reservoir (1), mit einem Oberteil (4) zur Messung des Flüssigkeits-Niveaus und einem Unterteil (7), das immer in die zu messende Flüssigkeit eingetaucht ist und als Bezugskondensator (32) dient, wobei die beiden Teile frei mit der zu messenden Flüssigkeit über zu diesem Zweck vorgesehene Öffnungen in Berührung stehen, dadurch gekennzeichnet, dass sie einen abgeflachten elektrischen Schaltkreis (11) und zwei Metallplatten (12 und 13) parallel zum Schaltkreis (11) aufweist und dass das Oberteil (4) der Sonde aus zwei parallelen Messkondensatoren (24 und 25) besteht, die gleiche Länge und gleiche Kapazität ($C_2$, $C_3$) aufweisen und aus zwei Metallbändern (18, 20) des Schaltkreises (11) bestehen, welche innere Belegungen bilden, während die Metallplatten (12 und 13) äussere Belegungen bilden und dass das Unterteil (7) der Sonde aus einem Bezugskondensator (32) der Kapazität ($C_1$) besteht, mittels eines metallischen Abschnittes (14) des Schaltkreises (11), der eine innere Belegung bildet und mit einer der inneren Belegungen (18, 20) eines der Messkondensatoren (24, 25) verbunden ist, während die Metallplatten (12 und 13) die äusseren Belegungen bilden, wobei der Referenzkondensator und der Messkondensator, mit dem er verbunden ist, eine Anordnung mit der Kapazität ($C_1 + C_2$) bilden.

2. Niveau-Sonde nach Anspruch 1, dadurch gekennzeichnet, dass wenigstens eine der Belegungen des Messkondensators (24, 25) und des Bezugskondensators (32) von der zu messenden Flüssigkeit mittels eines dünnen, festen Dielektrikums isoliert ist, das nicht durchfeuchtbar ist und auf einer der Belegungen (16, 18, 20) aufgebracht ist und bezüglich der anderen Belegungen (12, 13) einen ausreichend grossen Raum schafft zum Durchlass von Luft oder Flüssigkeit.

3. Niveau-Sonde nach Anspruch 2, dadurch gekennzeichnet, dass der Raum zwischen den Belegungen der beiden Messkondensatoren (24, 25) einerseits vom festen, dünnen Dielektrikum gebildet wird und andererseits von der zu messenden Luft oder Flüssigkeit, wobei einer der Messkondensatoren (24) und der Bezugskondensator (32) durch ihre isolierte Belegung (18, 16) zusammengeschaltet sind.

4. Niveau-Sonde nach einem der Ansprüche 2 und 3, dadurch gekennzeichnet, dass das dünne, feste, nicht durchfeuchtbare Dielektrikum ein fluoriertes Kunstharz oder ein Polyethylenderivat ist.

5. Niveau-Sonde nach einem der Ansprüche 1 bis 4, dadurch gekennzeichnet, dass der Raum zwischen den Belegungen des Bezugskondensators (32) im Unterteil (7) von Fasern ausgefüllt ist, die die Flüssigkeit aufsaugen.

6. Niveau-Sonde nach einem der Ansprüche 1 bis 5, dadurch gekennzeichnet, dass eine Saugleitung (8) für die Flüssigkeit im Unterteil (7) der Sonde vorgesehen ist.

7. Niveau-Sonde nach einem der Ansprüche 1 bis 6, dadurch gekennzeichnet, dass in den verschiedenen den Bezugskondensator (32) bildenden Abschnitten Öffnungen (33, 28, 29) vorgesehen sind, die den Flüssigkeitsdurchgang von der Leitung (8) bis zur Ansaugleitung (9) ermöglichen und dass eine Verschlussanordnung (30, 31) vorgesehen ist, die das Ansaugen von im Oberteil (4) der Sonde vorhandener Flüssigkeit verhindert.

8. Niveau-Sonde nach einem der Ansprüche 1 bis 7, dadurch gekennzeichnet, dass elektronische Schaltkreise zur sofortigen Verarbeitung am Auslass (19, 21) der Sonde und ausserhalb des Reservoirs vorgesehen sind.

9. Niveau-Sonde nach einem der Ansprüche 1 bis 8, dadurch gekennzeichnet, dass die Belegungen (18, 20 und 16), die die inneren Belegungen des Messkondensators (24, 25) bzw. des Bezugskondensators (32) bilden, aus einem abgeflachten Schaltkreis (11a) bestehen, der an den Rändern Öffnungen (42 und 43) aufweist und dass die Metallbelegungen (12a und 13a), die als Aussenbelegungen der Kondensatoren dienen, mit Zähnen (45 und 46) entlang ihrer Ränder versehen sind, die dazu dienen, in die Öffnungen (42 und 43) einzugreifen, um die innere Belegung in Längsrichtung der äusseren Belegungen auszurichten und in die Breite zu spannen.

10. Niveau-Sonde nach einem der Ansprüche 1 bis 9, dadurch gekennzeichnet, dass die Metallbelegungen (12a, 13a) mit Hilfe wenigstens einer Zunge (38) im Inneren eines Vorsprungs (37) der Verschlussplatte (36) der Sondenöffnung (3) angeklemmt sind.

11. Niveau-Sonde nach einem der Ansprüche 9 und 10, dadurch gekennzeichnet, dass der flache Schaltkreis (11a) entlang seines Randes Metallbänder (40, 41) aufweist, die in elektrischer Berührung mit den Metallbelegungen (12a, 13a) stehen.

12. Niveau-Sonde nach einem der Ansprüche 1 bis 11, dadurch gekennzeichnet, dass der untere Abschnitt (7a) der Sonde (4a) entlang des Sondenkörpers gefaltet ist, um mit diesem einen spitzen Winkel zu bilden, wobei der untere Abschnitt (7a) parallel zum Boden des Behälters (1) ist.

13. Niveau-Sonde nach einem der Ansprüche 1 bis 12, dadurch gekennzeichnet, dass die Ansaugleitung (89a) für die Flüssigkeit U-förmig ist und an drei Seiten den unteren Abschnitt (7a) der Sonde umgibt und dass ein Filtersieb im Innenteil des U vorgesehen ist.

14. Niveau-Sonde nach einem der Ansprüche 1 bis 13, dadurch gekennzeichnet, dass die Belegungen (12a, 13a) aus einem Kunststoff bestehen, dessen Oberfläche mittels einer ein Metallpulver enthaltenden Farbe metallisiert ist.

**Claims**

1. A capacitive probe for measuring the level of liquid in a tank (1) comprising an upper portion (4) serving to measure the level of liquid and a lower portion (7) which is always immersed in the liquid to be measured, serving as a reference capacitor (32), the two portions freely communicating with the liquid to be measured by way of orifices provided for that purpose, characterised in that it comprises a flat electrical circuit (11) and two metal plate portions (12 and 13) which are parallel to the circuit (11), and that the upper portion (4) of the probe is formed by two parallel measuring capacitors (24 and 25) which are identical in length and of the same capacitance $C_2$, $C_3$, formed by two metal strips (18 and 20) of the circuit (11) forming internal plates and the metal plate portions (12 and 13) forming external plates, and that the lower portion (7) of the probe is formed by a reference capacitor (32) of a capacitance $C_1$, which is formed by a metal portion (14) of the circuit (11) forming an internal plate, connected to one of the internal plates (18, 20) of one of the measuring capacitors (24, 25), and by the metal plate portions (12 and 13) forming external plates, the reference capacitor and the measuring capacitor to which it is connected forming an assembly of a capacitance $C_1 + C_2$.

2. A level probe according to claim 1, characterised in that one at least of the two plates of the measuring capacitor (24, 25) and the reference capacitor (32) is insulated from the liquid to be measured by a thin solid non-wetting dielectric plated on said plates (16, 18, 20) and providing with respect to the other plates (12, 13) a space sufficient for the flow of air or the liquid.

3. A level probe according to claim 2, characterised in that the inter-plate spacing of the two measuring capacitors (24, 25) is formed on the one hand by the thin solid dielectric and on the other hand by the air or liquid to be measured, one (24) of the measuring capacitors and the reference capacitor (32) being connected together by their insulated plate (18, 16).

4. A level probe according to either one of claims 2 and 3, characterised in that the thin solid non-wetting dielectric is a fluorinated resin or a polyethylene derivative.

5. A level probe according to one of claims 1 to 4, characterised in that the inter-plate space of the reference capacitor (32) which is disposed in the lower portion (7) is filled by absorbent fibres which are wetted by the liquid.

6. A level probe according to any one of claims 1 to 5, characterised in that a suction intake strainer (8) for the liquid is included in the lower portion (7) of the probe.

7. A level probe according to any one of claims 1 to 6, characterised in that provided in the different portions making up the reference capacitor (32) are orifices (33, 28, 29) permitting flow of the liquid from the strainer (8) to the intake conduit (9) and that closure means (30, 31) are provided, to prevent intake of the liquid contained in the upper portion (4) of the probe.

8. A level probe according to any one of claims 1 to 7, characterised in that electronic processing circuits are provided immediately at the outlet (19, 21) of the probe to the outside of the tank.

9. A level probe according to any one of claims 1 to 8, characterised in that the plates (18, 20) and (16) which respectively constitute the internal plates of the measuring capacitors (24 and 25) and the reference capacitor (32) are formed by a flat circuit (11a) which on the edges has holes (42 and 43) and that the metal plates (12a and 13a) serving as external plates to the capacitors are provided with teeth (45 and 46) on their edges, intended to engage into the holes (42 and 43) for positioning in respect of length and tensioning in respect of width the internal plate in the external plates.

10. A level probe according to any one of claims 1 to 9, characterised in that the metal plates (12a, 13a) are clipped by means of at least one tongue portion (38) to the interior of a projection (37) on the closure plate (36) for closing the probe hole (3).

11. A level probe according to either one of claims 9 and 10, characterised in that on its edge the flat circuit (11a) has metal strips (40, 41) which come into electrical contact with the metal plates (12a, 13a).

12. A level probe according to any one of claims 1 to 11, characterised in that the lower portion (7a) of the probe (4a) is bent over the probe body to form an acute angle therewith, said lower portion (7a) being parallel to the bottom of the tank (1).

13. A level probe according to any one of claims 1 to 12, characterised in that the suction intake strainer (8a) for the liquid is of a U-shape surrounding the lower portion (7a) of the probe on three sides, and that a filtering sieve is provided in the lower part of the U-shape.

14. A level probe according to any one of claims 1 to 13, characterised in that the plates (12a, 13a) are of plastics material with surface metallisation by means of a paint containing metal powder.

Fig 1

Fig 2

Fig 3

Fig 4

Fig 5

Fig 6

FIG.7

FIG.8

FIG.9

FIG.11

FIG.10

## FIG.12

## FIG.13